## Europäisches Patentamt
## European Patent Office
## Office européen des brevets

(11) Veröffentlichungsnummer: **0 252 047**
**A2**

(12) **EUROPÄISCHE PATENTANMELDUNG**

(21) Anmeldenummer: **87850202.0**

(22) Anmeldetag: **18.06.87**

(51) Int. Cl.⁴: **B 23 K 9/02**

(30) Priorität: **23.06.86 SE 8602765**

(43) Veröffentlichungstag der Anmeldung:
**07.01.88 Patentblatt 88/01**

(84) Benannte Vertragsstaaten:
**DE ES FR GB IT NL**

(71) Anmelder: **ESAB Aktiebolag**
**Box 8004 Herkulesgatan 72**
**S-402 77 Göteborg (SE)**

(72) Erfinder: **Gisselfeldt, Rune**
**Parkgatan 3**
**S-695 00 Laxa (SE)**

(74) Vertreter: **Frisch, Kurt**
**c/o ESAB AB Box 8004**
**S-402 77 Göteborg (SE)**

(54) **Verfahren zum einseitigen Lichtbogenschweissen.**

(57) Beim einseitigen Lichtbogenschweißen von zwei eine offene Fuge bildenden Werkstücken (1, 2) wird in die mindestens 6 mm breite Wurzelöffnung ein Metallband (10) eingelegt, das auf einer schlackebildenden Schichte (7) einer Schweißunterlage aufliegt, die an der Wurzelseite (8, 9) der Werkstücke anliegt. Die beiden Stumpfstöße (13, 14) zwischen dem Metallband (10) und den Fugenflanken (3, 4) werden geschweißt und die Fuge gegebenenfalls mit weiteren Schweiß-raupen ausgefüllt. Das Verfahren ist insbesondere für das Schweißen von schmalen und tiefen Fugen geeignet.

Fig. 1

**Beschreibung**

Verfahren zum einseitigen Lichtbogenschweißen

Die Erfindung bezieht sich auf ein Verfahren zum einseitigen Lichtbogenschweißen von zwei eine offene Fuge bildenden Werkstücken, bei dem die Werkstücke vor dem Schweißen mit ihrer Wurzelseite auf einer aus schlackebildendem Material bestehenden Unterlage aufgelegt werden.

Bei bekannten Verfahren dieser Art wird die Fuge beispielsweise als V-, Y- oder U-Fuge mit einem Wurzelspalt vorbereitet, der höchstens ein paar Millimeter breit ist. Der Wurzelspalt wird dann gewöhnlich mit einer einzigen Wurzelraupe verschweißt. In gewissen Fällen kann es aus Qualitätsgründen erforderlich sein, die Wurzelraupe erst nach Füllung der Fuge und Wenden des Werkstücks zu schweißen.

Es ist wünschenswert die zeitraubende Fugenvorbereitung von besonderen Fugenformen zu vermeiden. Insbesondere gilt dies beim Schweißen von dicken Werkstücken mit großflächigen Fugenflanken. In solchen Fällen werden oft schmale Fugen vorgezogen um den Verbrauch von Zusatzmaterial zu begrenzen. Die Schweißgutmenge ist dann verhältnismäßig gering, wodurch auch die Schrumpfung der Schweißnaht begrenzt wird.

Bei einem bekannten Verfahren dieser Art - AT 378 721 - werden die Werkstücke auf einer Wurzelunterlage mit offener I-Fuge angebracht. Die Unterlage wird durch zwei Wurzelraupen an die Wurzelseite des Werkstücks geschweißt und muß nach der vollendeten Schweißung wieder enffernt werden. Ein besonderes Arbeitsverfahren, z.B. Abhobeln der Wurzelseite, ist somit notwendig. In gewissen Fällen ist es auch erforderlich das Werkstück umzudrehen um an die Wurzelseite zwecks Entfernung der angeschweißten Wurzelunterlage heranzukommen. Es ist im allgemeinen nicht zulässig die stets nur auf einem Teil ihrer Breite angeschweißte Wurzelunterlage am Werkstück zu belassen, um sich die Entfernung der Unterlage zu ersparen, da sich in dem nicht verschweißten Spalt zwischen der Wurzelunterlage und der Wurzelseite der Werkstücke bald eine unkontrollierbare Korrosion entwickelt.

Die vorliegende Erfindung hat sich zur Aufgabe gestellt ein Verfahren der eingangs genannten Gattung zu schaffen, um die Fugenvorbereitung zu vereinfachen und eine Nachbearbeitung der Wurzelseite zu vermeiden. Die Schweißqualität soll dabei sehr hochgestellten Qualitätsforderungen genügen.

Das Verfahren gemäß der Erfindung zeichnet sich dadurch aus, daß die Werkstücke mit einer Wurzelöffnung von mindestens 6 mm auf der Unterlage angebracht werden und in die Wurzelöffnung der Fuge ein auf der Unterlage aufliegendes Mettalband eingelegt wird, das mit den beiden Fugenflanken je einen Stumpfstoß bildet, und die Werkstücke mit dem Band durch je eine Kehlnaht verschweißt werden, wobei die zugeführte Schweißenergie so gewählt wird, daß sich die Zone des aufgeschmolzenen Grundwerkstoffs von Werkstück und Band bis zur Wurzelseite erstreckt, wonach die Fuge erforderlichenfalls mit mehreren Schweißraupen unter Zufuhr von Zusatzmaterial ausgefüllt wird.

Das Verfahren eignet sich besonders zum Schweißen von schmalen, tiefen Fugen, worunter allgemein eine Fuge verstanden wird, deren Tiefe mindestens viermal so groß wie deren Breite ist. Die Breite der Fuge soll doch mindestens 6 mm betragen, um Platz für je eine Kehlnaht mit den beiden Fugenflanken zu schaffen. Das im Bereich der Kehlnaht vom aufgeschmolzenen Grundwerkstoff gebildete Schmelzbad wird von der Unterlage gegen seitliches Ausfließen abgedämmt. Mit diesem Verfahren wird stets eine passende Nahtüberhöhung auf der Wurzelseite erreicht.

Weitere Vorteile der Erfindung gehen aus der folgenden Beschreibung eines Ausführungsbeispiels der Erfindung im Zusammenhang mit der beigefügten Zeichnung hervor.

Fig. 1 zeigt eine Schweißfuge im Schnitt.

Fig. 2 zeigt einen Ausschnitt einer teilweisen geschweißten Fuge.

Fig. 3 ist ein Schnitt durch die fertige Stumpfnaht.

Fig. 4 und 5 zeigen etwas schematisch eine Schweißausrüstung in zwei verschiedenen Ansichten zum Schweißen einer Fuge gemäß gemäß Fig. 1.

Fig. 6 und Fig. 7 zeigen eine etwas modifierte Schweißausrüstung

Zwei Werkstücke 1, 2 bilden mit ihren ebenen Fugenflanken eine schmale I-Fuge. Eine Wurzelunterlage, die aus einer Kupferschiene 5 mit Kühlkanälen 6 und einem Glasfiberband 7 besteht, liegt an der Wurzelseite 8, 9 der Werkstücke an. Ein Metallband 10 ist in die Wurzelöffnung der Fuge eingelegt und wird vom Glasfiberband unterstützt, so daß die Unterseite des Bandes im wesentlichen in der gleichen Ebene wie die Wurzelseite der Werkstücke liegt. Das Band besteht zweckmäßig aus dem gleichen Material wie die Werkstücke. Ein Schweißbrennermundstück 11 ist in die Fuge eingeführt und eine durch das Mundstück vorschiebbare Elektrode 12 ist gegen einen der Stumpfstöße 13, 14 zwischen der Fugenflanken 3, 4 und dem Band 10 gerichtet.

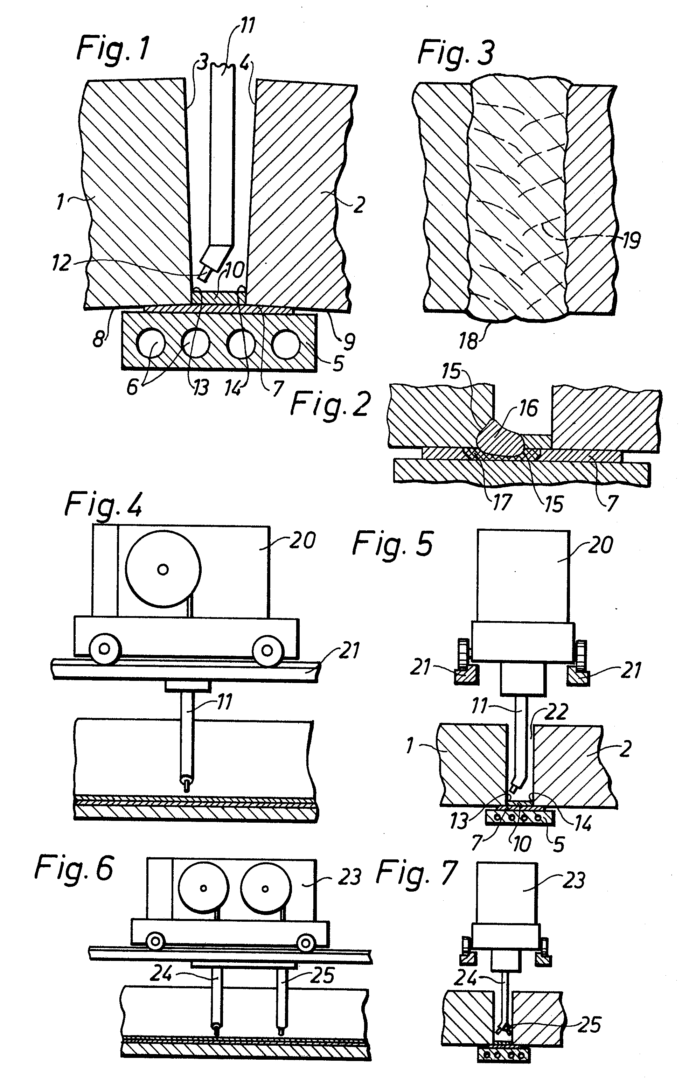

Beim Schweißen der Kehlnaht wird so viel Energie zugeführt, daß die durch die Schmelzgrenze 15 bestimmte Zone 16 im Werkstück und Band in der Nähe des Stumpfstoßes zur Gänze schmilzt. Durch die Schmelzwärme wird auch ein Teil des Glasfiberbandes, das das Schmelzbad teils gegen Ausfließen abdämmt und teils gegen den Zutritt der Atomsphäre schützt, geschmolzen oder erweicht. Das metallische Schmelzbad sinkt etwas durch und bildet dank der stützenden Glasschmelze 17 eine gleichförmige Wurzellage 18 (Fig. 3). Die beiden Stumpfstöße 13, 14 werden gemäß gekannten Lichtbogenschweißverfahren geschweißt, wie z.B. TIG-Schweißverfahren mit oder ohne Zusatzdraht, MIG-, MAG-, Unterpulver- oder Plasmaschweißverfahren.

Nach der Schweißung der Kehlnähte wird die Fuge mit weiteren Schweißraupen unter Zufuhr von Zusatzmaterial ausgefüllt. Beim Schweißen von schmalen Fugen wird die Fugenbreite allgemeinen bereits von zwei nebeneinander niedergelegten Schweißraupen ausgefüllt. Die fertige Naht ist in Fig. 3 dargestellt. Der Übergang zwischen den einzelnen Schweißraupen ist durch gestrichelte Linien 19 angedeutet.

Ein etwas schematisch dargestellter Schweißapparat 20 mit einem Schweißbrennermundstück 11 ist längs Schienen 21 oberhalb und parallel zu der Schweißfuge 22 verfahrbar. Nach dem Schweißen des einen Stumpfstoßes 13 wird das Mundstück 11 umgestellt, um den anderen Stumpfstoß 14 zu schweißen. Wird ein Schweißapparat 23 mit zwei Schweißbrennern 24, 25 ausgerüstet, kann die Schweißzeit wesentlich verringert werden. Die beiden Schweißbrenner sind hintereinander angeordnet und die beiden Stumpfstöße werden im wesentlichen gleichzeitig geschweißt.

Wie oben erwähnt, eignet sich das hier beschriebene Verfahren besonders zum Schweißen von schmalen und tiefen I-Fugen. Die Fugenvorbereitung ist billig und einfach, die Schweißung erfordert keine besonderen Maßnahmen und die Wurzelseite erfordert keine nachträgliche Bearbeitung. Die beiden Werkstücke werden vor dem Schweißen in etwas geneigter Lage angebracht, was lediglich in Fig. 1 und dort etwas übertrieben dargestellt ist. Der Fugenwinkel beträgt nur wenige Grade. Der Fugenwinkel wird in bekannter Weise mit Rücksicht auf die Schrumpfung des Schweißgutes so groß gewählt, daß die Neigung der Werkstücke durch die Schrumpfung beseitigt wird.

Anstelle des Glasfiberbandes kann auch ein anderes schlackebildendes Material wie z.B. Schweißpulver verwendet werden. Das Glasfiberband ist jedoch im allgemeinen einfacher zu handhaben. Die Glasschmelze löst sich leicht vom Werkstück ab und die Wurzelseite weist eine sehr gleichmäßige und fehlerfreie Oberfläche auf. Als Glasfiberband wird zweckmäßigerweise eine sehr dicht gewebte Variante verwendet um die im Band eingeschlossene Luftmenge möglischt gering zu halten.

Das Metallband, das in die Wurzelöffnung gelegt wird, soll eben sein und auf seiner ganzen Länge auf dem Glasfiberband aufliegen. Als Metallband wird daher eine Flachstange oder anderes gerichtetes Profil mit passender Dimensionen verwendet. Die Breite des Metallbandes ist durch die Breite der Wurzelöffnung bestimmt. Dabei können infolge der Herstellungstoleranzen im Stumpfstoß kleine Spalten zwischen dem Band und der Fugenflanke auftreten. Es hat sich erwiesen, daß diese Spalten die Schweißqualität nicht merkbar beeinflussen.

Das Metallband sollte mindestens 2 mm dick sein. Diese Banddicke gilt für schmale Bänder von 6 mm Breite oder etwas mehr. Je breiter de Wurzelöffnung und damit das Band ist, desto dickere Bänder sind zu verwenden. Ist das Band zu dünn, wird die Ausbreitung der Schmelzzone ungünstig beeinflußt. Weiters läßt sich die Qualität der Wurzellage schwer kontrollieren und außerdem besteht die Gefahr daß der Lichtbogen das Band durchbrennt, was Fehler in der Wurzellage zur Folge hätte.

## Patentansprüche

1. Verfahren zum einseitigen Lichtbogenschweißen von zwei eine offene Fuge bildenden Werkstücken (1, 2), bei dem die Werkstücke vor dem Schweißen mit ihrer Wurzelseite auf einer aus schlackenbildendem Material bestehenden Unterlage (7) aufgelegt werden, **dadurch gekennzeichent,** daß die Werkstücke mit einer Wurzelöffnung von mindestens 6 mm auf der Unterlage (7) angebracht werden und in die Wurzelöffnung der Fuge ein auf der Unterlage aufliegendes Band (10) eingelegt wird, das mit den beiden Fugenseiten je einen Stumpfstoß bildet, und die Werkstücke mit dem Band durch je eine Kehlnaht verschweißt werden, wobei die zugeführte Schweißmenge so eingestellt wird, daß sich die Zone des aufgeschmolzenen Grundwerkstoffs von Werkstück und Band bis zur Wurzelseite erstreckt, wonach die Fuge erforderlichenfalls unter Zufuhr von Zusatzmaterial mit mehreren Schweißraupen ausgefüllt wird.

2. Verfahren nach Patentanspruch 1, **dadurch gekennzeichnet,** daß die beiden Stumpfnähte nacheinander gechweißt werden.

3. Verfahren nach Patentanspruch 1, **dadurch gekennzeichnet,** daß mit der Schweißung der zweiten Kehlnaht begonnen, bevor die Schweißung der ersten Kehlnaht beendet ist.

4. Verfahren anch Patentanspruch 1, **dadurch gekennzeichnet,** daß die Schweißung der beiden Kehlnähte gleichzeitig erfolgt.

5. Verfahren nach einem der Patentansprüche 1 bis 4, **dadurch gekennzeichnet,** daß die Dicke des Bandes (10) mindestens 2 mm beträgt.

6. Verfahren nach einem der Patentansprüche 1 bis 5, **dadurch gekennzeichnet,** daß die Unterlage (7) ein Glasfiberband ist.

0252047

Fig. 1

Fig. 3

Fig. 2

Fig. 4

Fig. 5

Fig. 6

Fig. 7